# EUROPEAN PATENT SPECIFICATION

(11) **EP 3 912 474 B1**
(45) Date of publication and mention of the grant of the patent: **04.12.2024**
(21) Application number: 19910367.2
(22) Date of filing: 25.10.2019
(51) Int. Cl.: A23D 7/005, A23D 9/007, A23D 9/04, A21D 13/00, A23D 9/02, A21D 2/08, A23L 27/20

(54) **METHOD FOR PRODUCING FLAVOR OIL HAVING BURNT CHEESE FLAVOR**
VERFAHREN ZUR HERSTELLUNG VON AROMAÖL MIT VERBRANNTEM KÄSEAROMA
PROCÉDÉ DE PRODUCTION D'HUILE AROMATIQUE AYANT UNE SAVEUR DE FROMAGE BRÛLÉ

(30) Priority: 16.01.2019 JP 2019005387
(43) Date of publication of application: 24.11.2021
(73) Proprietor: Fuji Oil Holdings Inc., Izumisano-shi, Osaka 598-8540 (JP)
(72) Inventor: FUKAHORI, Yoshitomo, Tsukubamirai-shi, Ibaraki 300-2436 (JP); KUMATANI, Tomoaki, Tsukubamirai-shi, Ibaraki 300-2436 (JP); SATO, Makiko, Izumisano-shi, Osaka 598-8540 (JP)
(74) Representative: Boult Wade Tennant LLP
(86) International application number: PCT/JP2019/041956
(87) International publication number: WO 2020/148963

(56) References cited:
- EP-A1- 0 775 444
- GB-A- 1 439 733
- JP-A- 2002 265 981
- JP-A- 2002 345 431
- JP-A- 2003 164 258
- JP-A- 2004 137 420
- JP-A- 2006 288 314
- JP-A- 2010 011 800
- JP-A- H0 622 691
- JP-A- H0 746 961
- JP-A- H05 292 881
- JP-A- H1 056 963
- JP-A- S 626 651
- JP-A- S5 843 755
- JP-A- S60 256 344
- JP-A- S61 166 345
- JP-A- S63 237 738
- US-A- 2 222 560
- US-A- 4 748 041

## Description

### Technical Field

The present invention relates to a method for producing a flavored oil having a savory burnt cheese flavor.

### Background Art

As a method of producing a flavored fat, Patent Document 1 discloses a method of adding rice bran to fat and heating the mixture. In addition, Patent Document 2 discloses a method of adding a lipid-protein complex, milk solid, and water to fat, and heating the mixture. Further, Patent Document 3 discloses a method of adding powdered dairy product, sugar, and amino acid to fat, and heating the mixture.

### Prior Art Documents

### Patent Documents

Patent Document 1: JP H01-218549 A
Patent Document 2: JP 2003-164258 A
Patent Document 3: JP 2002-171903 A.

US 2222560 relates a cheese flavoured coating for popcorn.

US 4748041 relates to an edible, lipid based squeezable, flavored savory shelf-stable composition designed to be shelf stored in a deformable plastic bottle, and to be squeezable at room temperature from a narrow opening of such bottle by the use of ordinary hand pressure, said composition having a paste consistency or stand-up similar to that of a cheese dip and containing lipid,emulsifier and bulking agent.

EP0775444 relates to pourable fat-compositions, provided with high levels (10-45 wt %) of herbs, spices, nuts and/or seeds having a good closed shelf life where the compositions have the following composition: 10-45 wt % herbs, spices,nuts or seeds 0-20 wt % cheese particles 1-10 wt % salt 50-89 wt % of fat blend, comprising(i) 90-99.8 wt % liquid oil (ii) 10-0.2 wt % hard fat, that can form crystal network, and 0.5-5wt % of flavourcompositions.

JP 2003-164258 relates to a flavorful oil and fat having good milk flavor and body and a method for producing the new flavorful oil and fat.

JP 2004137420 relates to a method for masking foreign taste and nasty smell of fish oil even when heated in production of oil and fat products such as margarine and shortening utilizing fish oils containing highly unsaturated fatty acids.

### Summary of Invention

### Problems to Be Solved by Invention

There have been a flavored oil such as flavored oil prepared by adding flavor to fat, and various flavored oil such as chili oil and green onion oil, in the market. However, they have not been able to satisfy the diversified needs of consumers. For example, typical cheese-based dishes such as cheese gratin, cheese toast, and cheese pizza, become more delicious with appetizing when cheese is heated with food and baked or charred to add the savory burnt cheese flavor. An object is to produce a flavored oil having burnt cheese flavor, which can impart a savory roasted cheese flavor or enhanced cheese taste to food simply by adding the flavored oil to the food. In other words, an object is to provide a flavored oil having a burnt cheese flavor, which can maintain a taste of dishes made from cheese at the same or better when an amount of the cheese is reduced.

### Means for Solving Problems

The inventors have intensively studied to solve the problem.

First, Patent Document 1 have been intended for an oil with a rich taste derived from rice oil, Patent Document 2 have been intended for an oil with milk taste and richness taste, and Patent Document 3 have been intended for a flavored oil with a savory butter flavor and a caramel-like sweet burnt butter flavor produced when butter is heated. However, there have been a need for new flavored oil to satisfy the diversified needs of consumers. Under such a background, the inventors have further intensively studied and have found a production method to obtain a flavored oil having a savory burnt cheese flavor including heating and reacting fat in the presence of a cheese-derived material. The present invention has been completed by the findings.

That is, the present invention relates to a method for producing a flavored oil, including heating a fat to 70 to 130°C in the presence of cheese powder at a content of 3 to 20% by mass with respect to the fat, and removing a solid content after the reaction wherein a water content in the reaction system before starting raising temperature to the reaction temperature is 1.5% by mass or less, and wherein the reaction is carried out i) under reduced pressure; or ii) in a pressurized state in a reaction system.

### Effect of Invention

The present invention enables to provide a flavored oil having a savory burnt cheese flavor and the present disclosure also relates to a food containing the flavored oil.

### Mode for Carrying Out Invention

The present invention relates to a method for producing a flavored oil having a savory burnt cheese flavor and the present disclosure also relates to a food containing the flavored oil.

Various types of fat may be used in the present invention. The specific examples include various animal and vegetable fats such as soybean oil, cottonseed oil, corn oil, safflower oil, olive oil, palm oil, rapeseed oil, rice bran oil, sesame oil, kapok oil, coconut oil, palm kernel oil, cocoa fat, lard, fish oil, and whale oil, as well as hydrogenated oil, fractionated oil, and interesterified oil thereof. Of course, a mixture of two or more of these fats may also be used.

Among them, vegetable fat with a light flavor is preferable, and soybean oil, rapeseed oil, palm oil, or palm fractionated oil is more preferable. These fats may be used as a base for the flavored oil to impart a savory burnt cheese flavor.

In the present invention, a cheese-derived raw material is used for the purpose of flavoring fat.

In the present invention, the cheese-derived material is cheese powder. Cheese powder is finely ground, which increases an efficiency of contact with fat, and thereby flavor components may be efficiently extracted. In the present invention, cheese powder is a cheese which is processed to powder form.

In the present invention, heating must be carried out in the presence of the cheese powder at a total amount of 3 to 20% by mass. Here, 3% by mass with respect to fat means, for example, an addition of 3 kg cheese-derived material onto 100 kg fat.

The total amount of the cheese powder is more preferably from 5 to 18% by mass, and more preferably from 8 to 15% by mass.

In the present invention, the type of cheese powder is not particularly limited, but it may include a product produced by grinding a super-hard cheese such as Romano cheese and Parmesan cheese, and then dehydrating and powderizing it with a fluidized bed dryer, and a product produced by grinding and melting a cheese such as Cheddar cheese and Gouda cheese to prepare processed cheese, and then dehydrating and powderizing it with a belt dryer or spray dryer. Among them, hard or semi-hard type such as Parmesan cheese, Cheddar cheese, Emmental cheese, Edam cheese, Gliere cheese, and Gouda cheese; blue mold type such as Gorgonzola cheese; and white mold type such as Camembert cheese, are preferable. More preferably, hard or semi-hard type such as Parmesan cheese, Cheddar cheese, Emmental cheese, Edam cheese, Gliere cheese, and Gouda cheese, may be used to impart a savory burnt cheese flavor to fat.

In the present invention, a water content of the cheese powder is preferably 8% by mass or less, more preferably 6% by mass or less, and further preferably 5% by mass or less. Therefore, the water content in the reaction system before starting raising temperature to the reaction temperature is 1.5% by mass or less, and more preferably 1% by mass or less.

In the present invention, the water content of cheese powder was measured by the loss on drying test with an oven.

Next, a process of a production method of the present invention is described.

In the production method of the present invention, a specified amount of cheese powder is added and heated at 70 to 130°C, preferably at 80 to 120°C, more preferably at 90 to 110°C to obtain a flavored fat having good savory burnt cheese flavor.

Heating at a higher temperature than the specified temperature may result in a strong burning odor. On the other hand, heating at a lower temperature than the specified temperature may not only result in insufficient cheese flavor in the resulting flavored oil, but may also result in a residual water content in the flavored oil greater than 0.5% by mass.

In the production method of the present invention, it is preferable to add a specified amount of cheese powder and react at a specified temperature for 0.1 to 3.0 hours, more preferably 0.3 to 2.5 hours, and further preferably 0.5 to 2.0 hours, and thereby a fat having a savory burnt cheese flavor may be obtained.

In the production method of the present invention, a specified amount of the cheese powder is added and reacted at a specified heating temperature for a specified time under reduced pressure with a vacuum of 60 mmHg or less in the reaction system. A condition of the reduced pressure is more preferably 55 mmHg or less, and further preferably 50 mmHg or less. By reducing the pressure in the reaction system, thermal degradation of fat may be suppressed.

In the production method of the present invention, a specified amount of the cheese powder is added and reacted in a pressurized state in the reaction system at a specified heating temperature. The reaction is preferably carried out under pressurized conditions, more preferably from 0.04 to 0.4 MPa, and further preferably from 0.06 to 0.3 MPa. The heat treatment is carried out using, for example, an autoclave or a vacuum pressurizing heating agitator.

In addition, in the production method of the present invention, it is also preferable to add a specified amount of cheese powder and react under an inert gas atmosphere in the reaction system at a specified heating temperature. An oxygen concentration in the reaction system is preferably 5.0% by volume or less, more preferably 1.0% by volume or less, and further preferably 0.5% by volume or less. This method of heating and stirring allows volatile flavor components which contribute to taste to remain in the oil while minimizing thermal degradation of fat, and it is further preferable. Examples of the inert gas to reduce the oxygen concentration in the reaction system include nitrogen and carbon dioxide. In the production method of the present invention, the reaction system is preferably placed under an inert gas atmosphere before heating and increasing temperature, but it may also be placed after heating and increasing temperature.

In the production method of the present invention, a specified amount of cheese powder is added to a specific fat. Then, the reaction is carried out at a specified heating temperature and for a specified time while stirring. The reaction is carried out by starting the time measurement from the point when the temperature of the fat reaches the temperature set as the heating temperature, and maintaining it in the range of the set temperature plus or minus 5°C for the set time. The temperature rise to the set temperature should be carried out as quickly as possible, and it is desirable not to change the temperature step by step such that the heating temperature and time are intentionally varied.

However, if a water contained in the cheese powder evaporates, the temperature rise may slow down before reaching the specified heating temperature, but this is not considered an intentional variation.

In the production method of the present invention, after the predetermined reaction, a solid including the added cheese powder are removed. The removal may be performed by filtration with filter paper. In the case of large-scale production, a filter press or centrifuge may be used. In this way, a flavored oil having the desired burnt cheese flavor may be prepared.

The flavored oil having a burnt cheese flavor obtained by the production method of the present invention shows almost no oxidative deterioration of the resulting flavored oil due to the relatively low temperature and short heating reaction time.

A residual water content in the flavored oil obtained by the production method of the present invention is preferably 0.5% by mass or less, more preferably 0.3% by mass or less, and further preferably 0.2% by mass or less.

The flavored oil having a burnt cheese flavor obtained by the production method of the present invention may be used in, for example, salad, pasta, bread, pizza, gratin, and baked confectionery, which contain cheese material to enhance the cheese flavor. Therefore, a savory cheese flavor may be obtained while reducing the amount of cheese used. In addition, pizza dough with a burnt flavor may be obtained by kneading the oil to pizza dough. Further, it may be used in various food applications such as margarine, shortening, cream, filling, and confectionery, which are difficult to use the cheese material as it is, despite the need to add cheese flavor.

### Examples

Hereinafter, the present invention will be described in detail by way of Examples. However, the spirit of the present invention is not limited to the Examples. In Examples, part and % are mass basis.

Examples 1-6, 9, 10, 12 and 13 are not according to the invention and are present for illustration purposes only.

### Study 1. Preparation of flavored oil

In a 1L three-necked flask, 500g refined palm oil (manufactured by Fuji Oil Co., Ltd.) was added, and then 40g Emmental cheese powder (water content: 3% by mass, manufactured by Lactosan A/S) was added on the oil, and the reaction was carried out at 100°C for 0.5 hour while stirring (350 rpm). The mixture was cooled to 60°C, and the oil and solids were filtered through a filter paper (Advantech Toyo No.5C) to obtain a flavored oil having a burnt cheese flavor of Example 1 (not according to the invention).

The flavored oil having a burnt cheese flavor of Example 2 (not according to the invention) was obtained in the same manner as in Example 1, except that the Emmental cheese powder was replaced with Parmesan cheese powder (water content: 3% by mass, manufactured by Lactosan A/S).

A flavored oil having a burnt cheese flavor of Example 3 (not according to the invention) was obtained in the same manner as in Example 1, except that the Emmental cheese powder was replaced with Gouda cheese powder (water content: 3% by mass, manufactured by Lactosan A/S).

The flavored oil having a burnt cheese flavor of Example 4 (not according to the invention) was obtained in the same manner as in Example 1, except that the Emmental cheese powder was replaced with Gorgonzola cheese powder (water content: 3% by mass, manufactured by Quely, S.A.).

The flavored oil of Comparative Example 1 was obtained in the same manner as in Example 1, except that the Emmental cheese powder was replaced with whole milk powder (water content: 3% by mass or less, milk fat content: 26% by mass, manufactured by Morinaga Milk Industry Co., Ltd).

The flavored oil having a burnt cheese flavor of Example 5 (not according to the invention) was obtained in the same manner as in Example 1, except that the amount of cheese powder added was changed from 8.0% to 3.0%.

The flavored oil having a burnt cheese flavor of Example 6 (not according to the invention) was obtained in the same manner as in Example 1, except that the amount of cheese powder added was changed from 8.0% to 15.0%.

In a 1L three-necked flask, 500g palm olein (manufactured by Fuji Oil Co., Ltd.) was added, and then 40g Emmental cheese powder was added on the oil, and the reaction was carried out at 80°C for 1.0 hour while stirring (350 rpm) under reduced pressure of 50mmHg. The mixture was cooled to 60°C, and the oil and solids were filtered through a filter paper (Advantech Toyo No. 5C) to obtain the flavored oil having a burnt cheese flavor of Example 7.

The flavored oil having a burnt cheese flavor of Example 8 was obtained in the same manner as in Example 7, except that the heating temperature was changed from 80°C to 120°C.

The flavored oil of Comparative Example 2 was obtained in the same manner as in Example 7, except that the heating temperature was changed from 80°C to 60°C.

The flavored oil of Comparative Example 3 was obtained in the same manner as in Example 7, except that the heating temperature was changed from 80°C to 150°C.

The reaction was carried out in the same manner as in Example 1, except that the reaction system was filled with nitrogen, an inert gas, to reduce the oxygen concentration to 0.1% by volume or less, and the reaction was carried out without pressure reduction, and 500 g soybean oil was added in a 1L three-necked flask, and then 40 g Emmental cheese powder was added on the oil, and the mixture was stirred (350 rpm) at 100°C for 0.5 hour. After the reaction, the mixture was cooled to 60°C, and the fat and solids were filtered through a filter paper to obtain the flavored oil having a burnt cheese flavor of Example 9(not according to the invention).

The flavored oil having a burnt cheese flavor of Example 10 (not according to the invention) was obtained in the same manner as in Example 9, except that the heating time was changed from 1.0 hour to 2.0 hours.

The reaction was carried out in the same manner as in Example 1, except that the reaction system was filled with nitrogen, an inert gas, to reduce the oxygen concentration to 0.1% by volume or less, and the reaction was carried out with an autoclave under a pressure of 0.15 MPa , and 8 kg soybean oil was added in a 10L reaction vessel, and then 640 g Emmental cheese powder was added on the oil, and the mixture was stirred (350 rpm) at 100°C for 0.5 hour. After the reaction, the mixture was cooled to 60°C, and the fat and solids were filtered through a filter paper to obtain the flavored oil having a burnt cheese flavor of Example 11.

### "Evaluation method for flavored fat"

The flavored oil prepared with the above formula was evaluated by five panelists who are engaged in the development of confectionery material and who conduct sensory evaluation of confectionery prototype on a daily basis, with imagining a burnt cheese flavor. As a result of the taste evaluation, a score of 3 or higher was considered acceptable.

### Evaluation criteria

5: A strong aroma and thickness of flavor of baked cheese is felt.
4: An aroma and thickness of flavor of baked cheese is felt.
3: An aroma of baked cheese is felt, but it is a little weak.
2: A burnt flavor is detected, but an aroma of baked cheese is barely perceptible.
1: An aroma of baked cheese is not felt at all, just a slightly sweet milky flavor is felt.

The flavored oils obtained in study 1 (Examples 1 to 11 and Comparative Examples 1 to 3) were evaluated according to the "Evaluation Method for Flavored Fat" described above, and the results are shown in Table 1 below. The burnt cheese flavor was a flavor that differed from the flavor of the cheese itself used as a raw material, but had the aroma of burnt cheese and the unique richness of cheese. Therefore, the flavor was able to impart cheese flavor without unnaturalness even when used in food that does not contain cheese. The refined palm oil, palm olein, and soybean oil used as a raw material were tasteless and odorless.

**Table 1. Formulation of flavored oil and result of taste evaluation**

| | Examples | | | | | | |
|---|---|---|---|---|---|---|---|
| | 1* | 2* | 3* | 4* | 5* | 6* | 7 |
| Refined palm oil | 100.0 (%) | 100.0 | 100.0 | 100.0 | 100.0 | 100.0 | |
| Palm olein | | | | | | | 100.0 |
| Soybean oil | | | | | | | |
| Emmental cheese powder | 8.0 | | | | 3.0 | 15.0 | 8.0 |
| Parmesan cheese powder | | 8.0 | | | | | |
| Gouda cheese powder | | | 8.0 | | | | |
| Gorgonzola cheese powder | | | | 8.0 | | | |
| Whole milk powder | | | | | | | |
| | | | | | | | |
| Condition | | | | | | | Reduced pressure |
| Heating temperature (°C) | 100 | 100 | 100 | 100 | 100 | 100 | 80 |
| Heating time (h) | 0.5 | 0.5 | 0.5 | 0.5 | 0.5 | 0.5 | 1.0 |
| | | | | | | | |
| Taste evaluation | 4 | 3 | 3 | 3 | 3 | 5 | 4 |

| | Examples | | | | Comparative Examples | | |
|---|---|---|---|---|---|---|---|
| | 8 | 9* | 10* | 11 | 1 | 2 | 3 |
| Refined palm oil | | | | | 100.0 | | |
| Palm olein | 100.0 (%) | | | | | 100.0 | 100.0 |
| Soybean oil | | 100.0 | 100.0 | 100.0 | | | |
| Emmental cheese powder | 8.0 | 8.0 | 8.0 | 8.0 | | 8.0 | 8.0 |
| Parmesan cheese powder | | | | | | | |
| Gouda cheese powder | | | | | | | |
| Gorgonzola cheese powder | | | | | | | |
| Whole milk powder | | | | | 8.0 | | |
| | | | | | | | |
| Condition | Reduced pressure | N2 | N2 | Pressurized | | Reduced pressure | Reduced pressure |
| Heating temperature (°C) | 120 | 100 | 100 | 100 | 100 | 60 | 150 |
| Heating time (h) | 1.0 | 0.5 | 2.0 | 0.5 | 0.5 | 1.0 | 1.0 |
| | | | | | | | |
| Taste evaluation | 4 | 5 | 5 | 5 | 1 | 1 | 2 |

| | | | | | | | |
|---|---|---|---|---|---|---|---|
| * Examples not according to the invention | | | | | | | |

### Study 2. Preparation of margarine

**Table 2. Formulation of margarine**

| Raw material | Example 12* | Comparative Example 4 | Comparative Example 5 |
|---|---|---|---|
| Extremely hydrogenated palm oil | 3.0 (%) | 3.0 | 3.0 |
| Refined palm oil (Example 9) | 42.0 | 0.0 | 0.0 |
| Refined palm oil (no taste added) | 0.0 | 42.0 | 42.0 |
| Palm olein | 38.0 | 38.0 | 38.0 |
| Emunsifier | 0.7 | 0.7 | 0.7 |
| Emmental cheese | 0.0 | 0.0 | 3.4 |
| Salt | 0.3 | 0.3 | 0.3 |
| Water | 16.0 | 16.0 | 12.6 |

| | | | |
|---|---|---|---|
| * Example not according to the invention | | | |

Lecithin, glycerin fatty acid ester, sorbitan monolaurate, and propylene glycol fatty acid ester were used as an emulsifier.

An oil phase was prepared by adding 0.7 parts emulsifier to an oil phase containing 3 parts extremely hydrogenated palm oil, 42 parts flavored oil of Example 9, and 38 parts palm olein. An aqueous phase, which was a mixture of 0.3 part salt and 16.0 parts water, was gradually added to the oil phase, and the mixture was pre-emulsified and pasteurized at 80°C for 15 minutes, and then quenched and plasticized with a combinator to prepare the margarine of Example 12 (not according to the invention).

The margarine of Comparative Example 4 was prepared by the same process as in Example 12, except that odorless and tasteless refined palm oil was used instead of the flavored oil of Example 9.

The margarine of Comparative Example 5 was prepared by the same process as in Comparative Example 4, except that 3.4 parts Emmental cheese and 12.6 parts water were used. The amount of Emmental cheese powder blended in Comparative Example 5 was blended to be the same as the amount added in preparing the flavored oil of Example 9.

### "Taste evaluation for margarine"

Taste evaluation was carried out by the same five panelists as in the "Evaluation method for flavored fat" above. A sample of margarine that had been refrigerated after preparation, and then conditioned to 20°C was subjected to a taste evaluation based on the margarine of Comparative Example 4, which did not contain flavored oil, as the standard. As a result, the margarine of Example 12 had a strong aroma of baked cheese, even though it did not contain cheese powder. The flavor of Comparative Example 5, in which Emmental cheese powder at the same amount as an additive amount of it when preparing the flavored oil was added to margarine, had less cheese taste than that of Example 12 and did not have a desirable cheese-like aroma. The meltability in the mouth of Example 12 (not according to the invention) and Comparative Examples 4 and 5 were comparable, with no significant difference.

### Study 3. Preparation of Koppe pan (hot dog bun)

**Table 3. Formulation of Koppe pan (not according to the invention)**

| Raw material | Formulation |
|---|---|
| Strong flour | 100.0(%) |
| Caster sugar | 8.0 |
| Salt | 1.8 |
| Skim milk powder | 2.0 |
| Margarine for kneading in | 10.0 |
| Yeast | 3.0 |
| Yeast food | 0.1 |
| Water | 67.0 |

### Preparation of Koppe pan

Koppe pan was prepared according to the formula shown in Table 3. Namely, 100 parts strong flour, 8 parts caster sugar, 1.8 parts salt, 2 parts skim milk powder, 3 parts yeast, 0.1 part yeast food, 10 parts margarine for kneading in, and 67 parts water were added and the mixture was kneaded with using a vertical mixer. The resulting dough underwent primary fermentation for 60 minutes at 27°C and 75% humidity. The dough was then divided into 1 kg portions, dock-formed into Koppe pan shapes, and after 60 minutes of fermentation at 37°C and 75% humidity, Koppe pan was baked in an oven (top 210°C, bottom 190°C) for 12 minutes.

The Koppe pan of Example 13 (not according to the invention) was prepared by using the margarine of Example 12 blended with flavored oil as the margarine for kneaded in, according to the above method for preparing Koppe pan.

The Koppe pan of Comparative Example 6 was prepared in the same manner as in Example 13, except that the margarine of Comparative Example 4, which did not contain flavored oil, was used instead of the margarine of Example 12.

The Koppe pan of Comparative Example 7 was prepared in the same manner as in Example 13, except that the margarine of Comparative Example 5 was used instead of the margarine of Example 12.

### "Taste evaluation for Koppe pan"

Taste evaluation of Koppe pan was carried out by the same five panelists as in the "Evaluation method for flavored fat" above. The taste evaluation was carried out for a sample of prepared Koppe pan one day after the preparation based on Comparative Example 6 as the standard. As a result, in Example 13, a savory cheese aroma was felt throughout the dough. In Comparative Example 7, a slight cheese flavor was felt, but the aroma was weaker, and especially inside the dough, a bread-derived aroma similar to that of Comparative Example 6 was felt. There was no significant difference between Example 13 (not according to the invention) and Comparative Examples 6 and 7 in terms of the float and texture of the Koppe pan.

### Discussion

It was shown that flavored oil having a burnt cheese flavor was produced by adding cheese-derived raw materials to fat and heating them. It was also confirmed that flavored fat prepared by depressurizing, pressurizing, and/or replacing the inside of the reaction system with inert gas increased their flavor intensity. Furthermore, it was confirmed that the use of these flavored oils imparted a savory cheese flavor to food that does not contain cheese.

## Claims

1. A method for producing a flavored oil, comprising heating a fat to 70 to 130ºC in the presence of cheese powder at a content of 3 to 20% by mass with respect to the fat, and removing a solid content after the reaction, wherein a water content in the reaction system before starting raising temperature to the reaction temperature is 1.5% by mass or less, and wherein the reaction is carried out i) under reduced pressure; or ii) in a pressurized state in a reaction system.

2. The method according to claim 1, wherein the cheese powder has a water content of 8% by mass or less.

3. The method according to claim 1 or 2, wherein the reaction is carried out under reduced pressure.

4. The method according to claim 1 or 2, wherein the reaction is carried out in a pressurized state in a reaction system.

5. The method according to claim 1 or 2, wherein the reaction is carried out in an inert gas atmosphere.

6. The method according to claim 5, wherein the heating is carried out by raising temperature in an inert gas atmosphere.

## Patentansprüche

1. Verfahren zur Herstellung eines aromatisierten Öls, umfassend das Erhitzen eines Fettes auf 70 bis 130°C in Gegenwart von Käsepulver in einem Gehalt von 3 bis 20 Massen-%, bezogen auf das Fett, und das Entfernen des Feststoffgehalts nach der Reaktion, wobei der Wassergehalt in dem Reaktionssystem vor Beginn der Temperaturerhöhung auf die Reaktionstemperatur 1,5 Massen-% oder weniger beträgt und wobei die Reaktion i) unter reduziertem Druck oder ii) in einem druckbeaufschlagten Zustand in einem Reaktionssystem durchgeführt wird.

2. Verfahren gemäß Anspruch 1, wobei das Käsepulver einen Wassergehalt von 8 Massen-% oder weniger aufweist.

3. Verfahren gemäß Anspruch 1 oder 2, wobei die Reaktion unter reduziertem Druck durchgeführt wird.

4. Verfahren gemäß Anspruch 1 oder 2, wobei die Reaktion in einem druckbeaufschlagten Zustand in einem Reaktionssystem durchgeführt wird.

5. Verfahren gemäß Anspruch 1 oder 2, wobei die Reaktion in einer Inertgasatmosphäre durchgeführt wird.

6. Verfahren gemäß Anspruch 5, wobei das Erhitzen durchgeführt wird, indem man in einer Inertgasatmosphäre die Temperatur erhöht.

## Revendications

1. Procédé pour produire une huile aromatisée, comprenant le chauffage d'une matière grasse à 70 à 130°C en présence de poudre de fromage à une teneur de 3 à 20 % en masse par rapport à la matière grasse, et le retrait d'une teneur en solides après la réaction, dans lequel une teneur en eau dans le système réactionnel avant le début de l'élévation de la température à la température de réaction est 1,5 % en masse ou moins, et dans lequel la réaction est conduite i) sous pression réduite; ou ii) dans un état sous pression dans un système réactionnel.

2. Procédé selon la revendication 1, dans lequel la poudre de fromage a une teneur en eau de 8 % en masse ou moins.

3. Procédé selon la revendication 1 ou 2, dans lequel la réaction est conduite sous pression réduite.

4. Procédé selon la revendication 1 ou 2, dans lequel la réaction est conduite dans un état sous pression dans un système réactionnel.

5. Procédé selon la revendication 1 ou 2, dans lequel la réaction est conduite dans une atmosphère de gaz inerte.

6. Procédé selon la revendication 5, dans lequel le chauffage est réalisé par élévation de la température dans une atmosphère de gaz inerte.
